# EUROPEAN PATENT APPLICATION

(11) **EP 4 432 051 A1**
(43) Date of publication of application: **18.09.2024**
(21) Application number: 23191278.3
(22) Date of filing: 14.08.2023
(51) Int. Cl.: G06F 3/01

(54) **DISPLAY CONTROL DEVICE, DISPLAY SYSTEM, AND PROGRAM**

(30) Priority: 15.03.2023 JP 2023041068
(71) Applicant: FUJIFILM Business Innovation Corp., Minato-ku Tokyo (JP)
(72) Inventor: KOBAYASHI, Saneyuki, Yokohama-shi, Kanagawa (JP)
(74) Representative: Kurig, Thomas

(57) **Abstract**

A display control device includes a processor configured to perform a control to display support information for supporting an operation of an operation target object included in a captured image that is obtained by imaging a real space by superimposing the support information on the real space or the captured image, in which the processor is configured to display the support information of one operation target object having a high priority of the operation by a user from among plural operation target objects included in the captured image.

## Description

### BACKGROUND OF THE INVENTION

### (i) Field of the Invention

The present invention relates to a display control device, a display system, and a program.

### (ii) Description of Related Art

In JP2020-149139A, a work support system that displays information related to work performed by a user on a display device worn on a user's head is disclosed. In the work support system, an image corresponding to a work process is displayed on a display unit of the display device in accordance with scenario data that defines an order in which a plurality of types of data are displayed.

### SUMMARY OF THE INVENTION

There is a technology for displaying support information for supporting an operation of an operation target object on a display device such as a head mounted display. Here, in a case where there are a plurality of operation target objects, it may be difficult for the user to operate the operation target objects based on the support information.

An object of the present invention is to provide a display control device or the like that displays support information so that an operation of an operation target object can be performed in a case where there are a plurality of operation target objects.

According to a first aspect of the present disclosure, there is provided a display control device including a processor configured to perform a control to display support information for supporting an operation of an operation target object included in a captured image that is obtained by imaging a real space by superimposing the support information on the real space or the captured image, in which the processor is configured to display the support information of one operation target object having a high priority of the operation by a user from among a plurality of operation target objects included in the captured image.

According to a second aspect of the present disclosure, there is provided the display control device according to the first aspect, in which the processor may be configured to specify the one operation target obj ect based on a relationship between the user and each operation target object in the captured image.

According to a third aspect of the present disclosure, there is provided the display control device according to the second aspect, in which the processor may be configured to set the operation target object having a short distance to the user in the captured image among the plurality of operation target objects, as the one operation target object.

According to a fourth aspect of the present disclosure, there is provided the display control device according to the second aspect, in which the processor may be configured to set the operation target object in a direction pointed by the user in the captured image among the plurality of operation target objects, as the one operation target object.

According to a fifth aspect of the present disclosure, there is provided the display control device according to any one of the second aspect to the fourth aspect, in which the processor may be configured to specify the one operation target object based on a relationship between an instrument used by the user and the operation target object as the relationship between the user and each operation target object.

According to a sixth aspect of the present disclosure, there is provided the display control device according to any one of the second aspect to the fifth aspect, in which the processor may be configured to specify the one operation target object from a position of each operation target object in the captured image in a case where the processor cannot specify the one operation target object from the relationship between the user and each operation target object in the captured image.

According to a seventh aspect of the present disclosure, there is provided the display control device according to the sixth aspect, the processor may be configured to set the operation target object that is located close to a center in the captured image among the plurality of operation target objects, as the one operation target object.

According to an eighth aspect of the present disclosure, there is provided the display control device according to any one of the second aspect to the fifth aspect, in which the processor may be configured to receive a selection of the one operation target object from among the plurality of operation target objects, in a case where the processor cannot specify the one operation target object from the relationship between the user and each operation target object in the captured image.

According to a ninth aspect of the present disclosure, there is provided the display control device according to any one of the sixth aspect to the eighth aspect, in which the processor may be configured to determine that the one operation target object cannot be specified in a case where the number of the operation target objects in the captured image exceeds a predetermined number.

According to a tenth aspect of the present disclosure, there is provided the display control device according to the first aspect, in which the processor may be configured to specify the one operation target object based on an operation state of the plurality of operation target objects.

According to an eleventh aspect of the present disclosure, there is provided the display control device according to the tenth aspect, in which the processor may be configured to specify the one operation target object from among the operation target objects for which a predetermined operation has not been completed, among the plurality of operation target objects.

According to a twelfth aspect of the present disclosure, there is provided the display control device according to any one of the first aspect to the eleventh aspect, in which the processor may be configured to display the support information according to a state of the one operation target object.

According to a thirteenth aspect of the present disclosure, there is provided the display control device according to any one of the first aspect to the twelfth aspect, in which the processor may be configured to display the support information according to a relationship between a state of the user and the one operation target object in the captured image.

According to a fourteenth aspect of the present disclosure, there is provided a display system including an imager that images a real space, a display that displays an image, and a processor that is configured to display support information for supporting an operation of an operation target object included in a captured image captured by the imager on the display by superimposing the support information on the real space or the captured image, in which the processor is configured to display the support information of one operation target object having a high priority of the operation by a user from among a plurality of operation target objects included in the captured image, on the display.

According to a fifteenth aspect of the present disclosure, there is provided a program causing a computer that performs a control to display support information for supporting an operation of an operation target object included in a captured image that is obtained by imaging a real space by superimposing the support information on the real space or the captured image, to implement a function of displaying the support information of one operation target object having a high priority of the operation by a user from among a plurality of operation target objects included in the captured image.

With the first aspect of the present invention, it is possible to provide a display control device or the like that displays support information so that the operation target object can be operated in a case where there are the plurality of operation target objects.

With the second aspect of the present invention, it becomes easy to display the support information about the operation target object to be operated by the user as compared with a case where the one operation target object is not specified based on the relationship between the user and each operation target object in the captured image.

With the third aspect of the present invention, it becomes easy to display the support information about the operation target object to be operated by the user as compared with a case where the operation target object having a short distance to the user in the captured image is not set as the one operation target object.

With the fourth aspect of the present invention, it becomes easy to display the support information about the operation target object to be operated by the user as compared with a case where the operation target object in the direction pointed by the user in the captured image is not set as the one operation target object.

With the fifth aspect of the present invention, it becomes easy to display the support information about the operation target object to be operated by the user as compared with a case where the one operation target object is not specified based on the relationship between the instrument used by the user and the operation target object.

With the sixth aspect of the present invention, it is possible to display the support information by specifying the one operation target object even in a case where the one operation target object cannot be specified from the relationship with the user.

With the seventh aspect of the present invention, it becomes easy to display the support information about the operation target object to be operated by the user as compared with a case where the operation target object that is located close to the center in the captured image is not specified as the one operation target object.

With the eighth aspect of the present invention, it becomes easy to display the support information about the operation target object in which the user desires to display the support information as compared with a case where the selection of the one operation target object from among the plurality of operation target objects is not received.

With the ninth aspect of the present invention, it becomes difficult to specify the operation target object not to be operated by the user as the one operation target object in a case where the number of operation target objects exceeds the predetermined number as compared with a case of specifying the one operation target object from the relationship between the user and each operation target object in the captured image.

With the tenth aspect of the present invention, it becomes easy to display the support information about the operation target object that requires the operation by the user as compared with a case where the one operation target object is not specified based on the operation state of the plurality of operation target objects.

With the eleventh aspect of the present invention, it becomes difficult to display the support information about the operation target object that does not require the operation by the user as compared with a case where the one operation target object is not specified from among the operation target objects for which the operation has not been completed.

With the twelfth aspect of the present invention, it becomes easy for the user to perform the operation according to the state of the one operation target object as compared with a case where the support information is not displayed according to the state of one operation target obj ect.

With the thirteenth aspect of the present invention, it becomes difficult for the user to perform an erroneous operation of the one operation target object, as compared with a case where the support information is not displayed according to the relationship between the state of the user and one operation target object.

With the fourteenth aspect of the present invention, it is possible to provide a display system or the like that displays support information so that the operation target object can be operated in a case where there are the plurality of operation target objects.

With the fifteenth aspect of the present invention, it is possible to provide a program or the like that displays support information so that the operation target object can be operated in a case where there are the plurality of operation target objects.

### BRIEF DESCRIPTION OF THE DRAWINGS

Exemplary embodiment(s) of the present invention will be described in detail based on the following figures, wherein:
Fig. 1 is a diagram illustrating an overall configuration of a display system to which the present exemplary embodiment is applied;
Fig. 2 is a diagram illustrating an example of a hardware configuration of a display control device;
Fig. 3 is a flowchart illustrating an example of a procedure of processing performed by the display control device;
Fig. 4 is a diagram for explaining a processing example 1 in which one operation target object is specified by a CPU, and is a diagram illustrating an example of a captured image captured by an imaging unit;
Fig. 5A and Fig. 5B are diagrams for explaining a processing example 2 in which one operation target object is specified by the CPU, and are diagrams illustrating an example of a captured image captured by the imaging unit;
Fig. 6A and Fig. 6B are diagrams for explaining another aspect of the processing example 2 in which one operation target object is specified by the CPU, and are diagrams illustrating an example of a captured image captured by the imaging unit;
Fig. 7A and Fig. 7B are diagrams for explaining a processing example 3 in which one operation target object is specified by the CPU, and are diagrams illustrating an example of a captured image captured by the imaging unit;
Fig. 8 is a diagram for explaining a processing example 4 in which one operation target object is specified by the CPU, and is a diagram illustrating an example of a captured image captured by the imaging unit;
Fig. 9 is a diagram illustrating an example of a screen displayed on a display unit of a display device in a case where one operation target object cannot be specified based on a relationship between a user and each operation target object in a captured image;
Fig. 10A and Fig. 10B are diagrams for explaining processing in which the CPU specifies one operation target object based on an operation state of each operation target object;
Fig. 11A and Fig. 11B are diagrams for explaining processing in which the CPU displays support information of one operation target object on the display unit of the display device;
Fig. 12 is a diagram illustrating another example of a screen displayed on the display unit of the display device; and
Fig. 13A and Fig. 13B are diagrams for explaining processing in which the CPU displays different support information on the display device according to a state of a device including one operation target object.

### DETAILED DESCRIPTION OF THE INVENTION

Hereinafter, an exemplary embodiment of the present invention will be described in detail with reference to the accompanying drawings.

### (Display System 1)

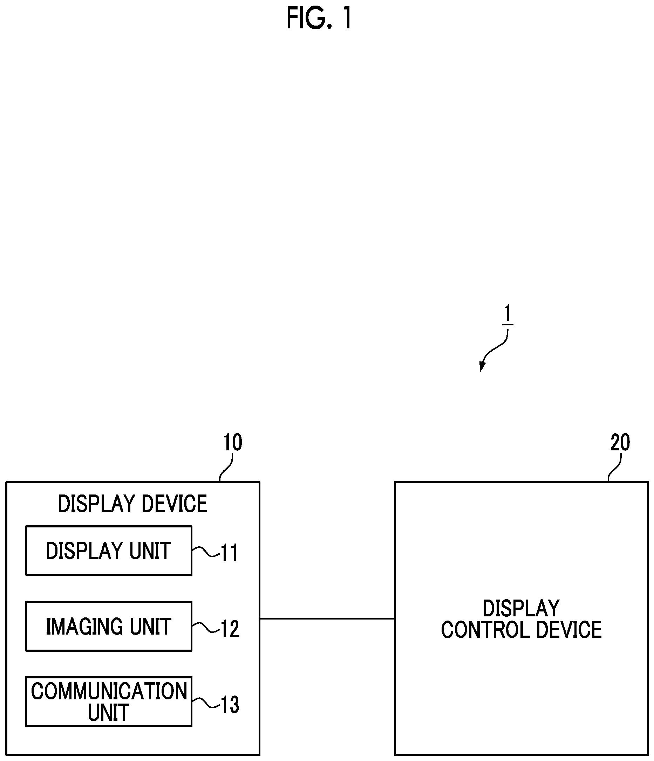

Fig. 1 is a diagram illustrating an overall configuration of a display system 1 to which the present exemplary embodiment is applied. In a case where a user performs an operation of an operation target object, the display system 1 displays support information for supporting the operation of the operation target object to support the operation by the user.

Here, the operation generally means working by moving the operation target object, but the present invention is not limited to this, and the "operation" in the present exemplary embodiment means that the user performs some operation on the operation target object. In addition, the "operation" includes, for example, an operation in which the operation target object is not moved, such as an operation of tapping an icon on a touch panel as an example of the operation target object or an operation of placing a hand over an infrared sensor as an example of the operation target object.

The display system 1 of the present exemplary embodiment includes a display device 10 and a display control device 20. The display control device 20 is composed of, for example, a computer device such as a personal computer (PC) or a server computer.

### (Display Device 10)

The display device 10 includes a display unit 11 which is an example of a display, and displays support information for supporting the operation of the operation target object on the display unit 11. In addition, the display device 10 displays support information on the display unit 11, superimposed on a real space or a captured image captured by an imaging unit 12, which will be described later, to support the operation of the operation target object included in the captured image, by the control of the display control device 20. Furthermore, the display device 10 may be an optically transmissive display device that displays the support information superimposed on the real space that is visually recognized through the display unit 11, or may be a non-transmissive display device that displays the support information superimposed on the captured image displayed on the display unit 11.

The real space is an actual existing space.

In the following, a case where the display device 10 is a head mounted display (in the following, referred to as an HMD) which is used by being worn on the user's head will be explained as an example. The display device 10 is not limited to the HMD as long as the display device 10 includes the display unit 11, and the display device 10 may be, for example, a smartphone, a mobile phone, a tablet terminal, or the like.

As illustrated in Fig. 1, the display device 10 includes the display unit 11, an imaging unit 12, and a communication unit 13.

The display unit 11 displays information. The display unit 11 is composed of, for example, an organic electro luminescent (EL) display or a liquid crystal display. The display unit 11 is provided to overlap the visual field of the user wearing the display device 10. The information displayed on the display unit 11 of the present exemplary embodiment includes a captured image captured by the imaging unit 12 and support information of the operation target obj ect.

The imaging unit 12 is an example of an imager, images the real space, and outputs a captured image which is a captured image. The imaging unit 12 is composed of, for example, a complementary metal oxide semiconductor (CMOS) image sensor or a charge-coupled device (CCD) image sensor. The imaging unit 12 may be composed of a single image sensor or may be composed of a plurality of image sensors.

In the present exemplary embodiment, the imaging unit 12 is integrally provided on the display device 10. Then, the imaging unit 12 images a real space located in a direction in which the user's head wearing the display device 10 is facing, in other words, in a direction in which the user wearing the display device 10 views through the display device 10.

The communication unit 13 is connected to the display control device 20 and transmits and receives information between the communication unit 13 and the display control device 20. The connection by the communication unit 13 is not particularly limited, and examples thereof include connection by Bluetooth (registered trademark), wireless LAN (Local Area Network), and the like, and a connection via the Internet. In addition, the communication unit 13 may be connected to the display control device 20 by a wired connection.

### (Display Control Device 20)

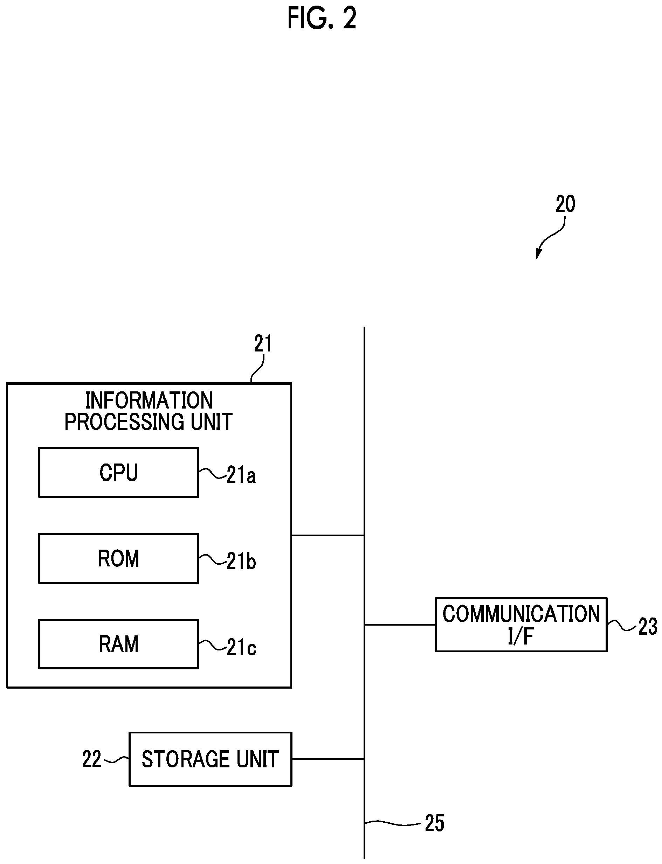

Subsequently, a hardware configuration of the display control device 20 will be explained. Fig. 2 is a diagram illustrating an example of the hardware configuration of the display control device 20.

As illustrated in Fig. 2, the display control device 20 includes an information processing unit 21 that processes information, a storage unit 22 that stores the information, and a communication interface (communication I/F) 23 that implements communication. In addition, in the display control device 20, the information processing unit 21, the storage unit 22, and the communication I/F 23 are connected to a bus 25, and exchange data via the bus 25.

As illustrated in Fig. 2, the information processing unit 21 is composed of a central processing unit (CPU) 21a, a read only memory (ROM) 21b, a random access memory (RAM) 21c.

The CPU 21a is an example of a processor, and implements each function, which will be described later, by loading various programs stored in the ROM 21b or the like to the RAM 21c and executing the programs. The RAM 21c is a memory that is used as a work memory or the like of the CPU 21a. The ROM 21b is a memory that stores various programs or the like executed by the CPU 21a.

Here, a program executed by the CPU 21a may be provided in a state of being stored in a computer-readable recording medium such as a magnetic recording medium (a magnetic tape, a magnetic disk, or the like), an optical recording medium (an optical disk or the like), a magnetooptical recording medium, or a semiconductor memory. In addition, the program executed by the CPU 21a may be provided by using communication means such as the Internet.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The storage unit 22 is composed of, for example, an HDD (Hard Disk Drive) and stores various types of data.

The storage unit 22 stores information related to a plurality of operation target objects for displaying the support information by the display control device 20. Examples of the information related to the plurality of operation target objects include information related to an image of each operation target object. Although details will be described later, the CPU 21a recognizes the operation target object included in the captured image by comparing the operation target object with the image stored in the storage unit 22.

In addition, examples of the information related to the plurality of operation target objects include information related to the operation procedure of each operation target object.

In addition, examples of the information related to the plurality of operation target objects include information related to tools used for operating each operation target object.

Further, examples of the information related to the plurality of operation target objects include information related to conditions for performing the operation of each operation target obj ect.

The storage unit 22 also stores the support information to be displayed on the display unit 11 of the display device 10. As described above, the support information is information for supporting the operation of the operation target object by the user wearing the display device 10. In addition, the support information is information that enables the user to grasp the operation (for example, what kind of operation has to be performed on the operation target object, what kind of operation has not to be performed, or the like) to be performed on the operation target object in a case where the user confirms the information.

The storage unit 22 stores a support image that is an image that supports the operation of the operation target object by the user and is displayed by superimposing the support image on the captured image which is captured by the imaging unit 12 and is displayed on the display unit 11, as an example of the support information.

The storage unit 22 stores the support information in association with each of the operation target objects for which the operation is supported by the support information.

### (Processing by Display Control Device 20)

In the display system 1, in a case where the user wearing the display device 10 performs the operation of the operation target object, the display control device 20 causes the display unit 11 of the display device 10 to display the support information for supporting the operation of the operation target object.

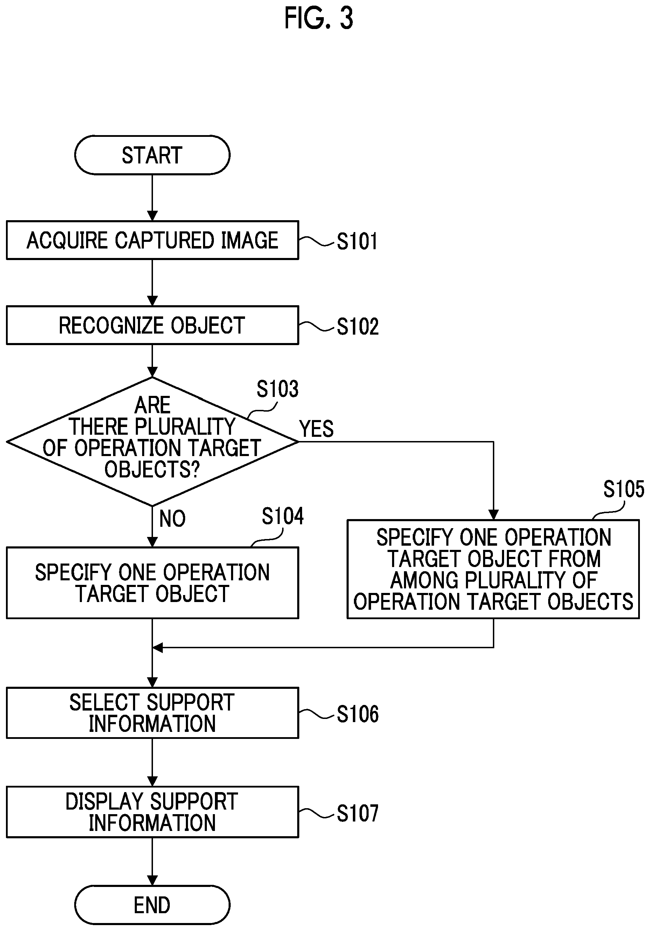

Subsequently, the operation of the display system 1 will be explained with a focus on the processing performed by the display control device 20. Fig. 3 is a flowchart illustrating an example of a procedure of the processing performed by the display control device 20. The processing performed by the display control device 20 is performed by executing the program by the CPU 21a of the information processing unit 21.

Here, a case where, in a case where the user wearing the display device 10 performs the operation of one operation target object from among a plurality of operation target objects, the display control device 20 displays the support information on the display unit 11 of the display device 10 will be explained as an example.

First, in the display system 1, imaging by the imaging unit 12 of the display device 10 worn on the user's head is started. In a case where the operation of the operation target object is performed, the user wearing the display device 10 faces the operation target object and attempts to visually recognize the operation target object through the display device 10. In this case, the imaging unit 12 images the real space including the operation target object.

Then, the CPU 21a acquires the captured image captured by the imaging unit 12 from the display device 10 (step S101).

Next, the CPU 21a analyzes the captured image which is acquired in step S101 and recognizes an object included in the captured image (step S102). Examples of the object recognized by the CPU 21a from the captured image in step S102 include an object related to the user wearing the display device 10 and the operation target object. Although details will be described later, the object related to the user recognized by the CPU 21a from the captured image includes parts of the user's body such as hands and fingers, as well as tools used by the user, gloves and clothes worn by the user. In the explanation of the present exemplary embodiment, the object related to the user included in the captured image may be simply referred to as a user.

In step S102, the CPU 21a, for example, recognizes the object included in the captured image by comparing the image of the object stored in advance in the storage unit 22 with the object included in the captured image. In addition, in a case where, for example, the image of the operation target object stored in advance in the storage unit 22 matches the image of the object included in the captured image, the CPU 21a recognizes the object included in the captured image as the operation target object.

As long as the CPU 21a can recognize the object included in the captured image by analyzing the captured image, the method is not particularly limited.

Next, the CPU 21a determines whether or not a plurality of operation target objects are included in the captured image, based on the analysis result of the captured image in step S102 (step S103).

In a case where the plurality of operation target objects are not included in the captured image, in other words, in a case where the operation target object included in the captured image is one (NO in step S103), the CPU 21a specifies the operation target object included in the captured image as one operation target object for which the support information is displayed on the display unit 11 (step S104).

On the other hand, in a case where the plurality of operation target objects are included in the captured image (YES in step S103), the CPU 21a specifies one operation target object for which the support information is displayed on the display unit 11 from among the plurality of operation target objects included in the captured image (step S105).

The processing of specifying one operation target object by the CPU 21a in step S105 will be explained in detail later.

Here, in the present exemplary embodiment, the "one operation target object" specified by the CPU 21a in step S104 and step S105 corresponds to "one operation target object having a high priority of the operation by a user". The high priority of the operation by the user means that the operation is performed with priority as compared with other operation target objects. Specifically, it means that it is desired that the user wearing the display device 10 intends to perform the operation of the operation target object or that the operation of the operation target object is performed depending on the state of the device including the operation target object.

Next, the CPU 21a selects support information for supporting the operation of the one operation target object specified in step S104 or step S105 from among a plurality of pieces of support information stored in the storage unit 22 (step S106).

The processing in which the CPU 21a selects the support information for supporting the operation of the one operation target object in step S106 will be explained in detail later.

Next, the CPU 21a outputs the support information for supporting the operation of the one operation target object selected in step S106 to the display device 10 and displays the support information on the display unit 11 (step S107).

In the display device 10, based on the control by the CPU 21a, the support information output from the CPU 21a is superimposed on a captured image including the one operation target object, which is captured by the imaging unit 12, and is displayed on the display unit 11. Accordingly, the user wearing the display device 10 can perform the operation of the operation target object based on the support information displayed on the display unit 11.

In particular, according to the display system 1 of the present exemplary embodiment, in a case where the plurality of operation target objects are included in the captured image captured by the imaging unit 12, the support information of one operation target object having a high priority of the operation by the user is displayed on the display unit 11 of the display device 10. Accordingly, even in a case where the plurality of operation target objects are included in the captured image captured by the imaging unit 12, it becomes easy for the user wearing the display device 10 to perform the operation of the one operation target object having a high priority of the operation by the user, based on the support information displayed in the display unit 11.

### (Processing of Specifying One Operation Target Object)

Subsequently, in step S105, processing of specifying one operation target object having a high priority of the operation by the user from among the plurality of operation target objects included in the captured image, which is performed by the CPU 21a of the display control device 20 will be explained.

### (Processing Example 1)

The CPU 21a of the present exemplary embodiment can specify, for example, one operation target object based on a relationship between the user and each operation target object in the captured image captured by the imaging unit 12 of the display device 10. Examples of the relationship between the user and each operation target object include a distance between the user and each operation target object in the captured image.

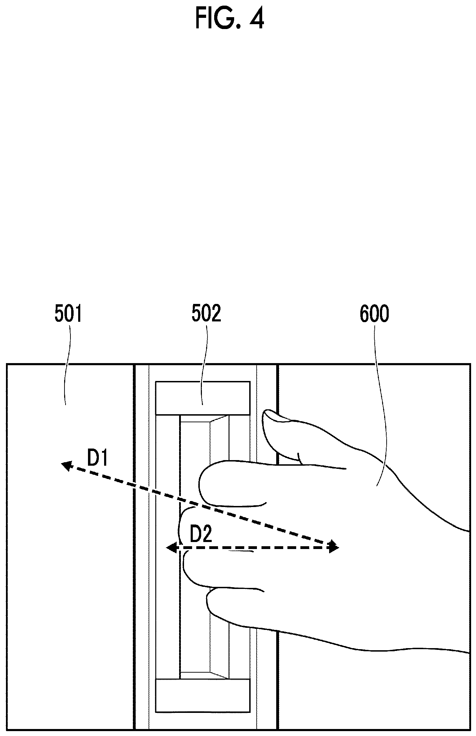

Fig. 4 is a diagram for explaining the processing example 1 in which one operation target object is specified by the CPU 21a, and is a diagram illustrating an example of the captured image captured by the imaging unit 12.

As illustrated in Fig. 4, in the captured image captured by the imaging unit 12, images of a glass cover 501 and a handle 502 as operation target objects that can be operated by the user are included. The CPU 21a recognizes the glass cover 501 and the handle 502 as operation target objects through image analysis of the captured image in step S102 described above. Then, in step S103 described above, the CPU 21a determines that the plurality of operation target objects are included in the captured image.

In addition, as illustrated in Fig. 4, an image of a hand 600 of the user wearing the display device 10 (refer to Fig. 1) is included in the captured image. The CPU 21a recognizes the user's hand 600 as an object related to the user through the image analysis of the captured image in step S102.

The CPU 21a acquires a distance between the object related to the user and each operation target object in the captured image by using the result of the image analysis of the captured image. In this example, the CPU 21a acquires a distance D1 between the user's hand 600, which is an example of the object related to the user, and the glass cover 501, which is an example of the operation target object, and a distance D2 between the user's hand 600 and the handle 502, which is an example of the operation target object.

The CPU 21a can set the distance between the object related to the user and the operation target object to, for example, a distance obtained by connecting the center of gravity of the object related to the user and the center of gravity of the operation target object in the captured image.

In addition, the CPU 21a can set the distance between the object related to the user and the operation target object to, for example, the shortest distance between the object related to the user and the operation target object in the captured image.

The CPU 21a specifies an operation target object having the shortest distance to the user among the plurality of operation target objects as one operation target object having a high priority of the operation by the user, based on the distance between the user and each operation target object in the captured image.

In the captured image illustrated in Fig. 4, the distance D2 between the user's hand 600 and the handle 502 is short as compared with the distance D1 between the user's hand 600 and the glass cover 501. Therefore, the CPU 21a specifies the handle 502 among the glass cover 501 and the handle 502, which are the plurality of operation target objects, as the one operation target object.

Here, in general, a user who intends to perform the operation of the operation target object often attempts to bring the object related to the user, such as a user's hand or a tool used for the operation, close to the operation target object. For this reason, in a case where there are the plurality of operation target objects, the distance between the operation target object to be operated by the user and the object related to the user tends to be short as compared with the distance between another operation target object not to be operated by the user and the object related to the user.

In the display system 1 of the present exemplary embodiment, in a case where the plurality of operation target objects are included in the captured image, the CPU 21a specifies an operation target object having a short distance to the object related to the user among the plurality of operation target objects, as one operation target object. Accordingly, it becomes easy to display the support information about the operation target object that the user is trying to perform the operation on the display unit 11 of the display device 10. Then, it becomes easy for the user to refer to the support information of the operation target object to be operated.

In addition, the CPU 21a may specify one operation target object from among the plurality of operation target objects according to the overlap between the object related to the user and each operation target object in the captured image, as the relationship between the object related to the user and the operation target object in the captured image. In addition, the CPU 21a may specify, among the plurality of operation target objects, the operation target object that overlaps the object related to the user in the captured image as one operation target object. In addition, in a case where, among the plurality of operation target objects, there are a plurality of operation target objects that overlap the object related to the user in the captured image, the CPU 21a may specify an operation target object having a large overlap with the object related to the user as one operation target object.

In the captured image illustrated in Fig. 4, among the plurality of operation target objects, the hand 600 overlaps the handle 502, while the hand 600 does not overlap the glass cover 501. Therefore, the CPU 21a can specify the handle 502 among the glass cover 501 and the handle 502 which are the plurality of operation target objects, according to the overlap between the object related to the user and each operation target object in the captured image as one operation target object.

### (Processing Example 2)

Processing in which the CPU 21a specifies one operation target object based on a relationship between a state of the user and each operation target object in the captured image as a relationship between the user and each operation target object in the captured image will be explained.

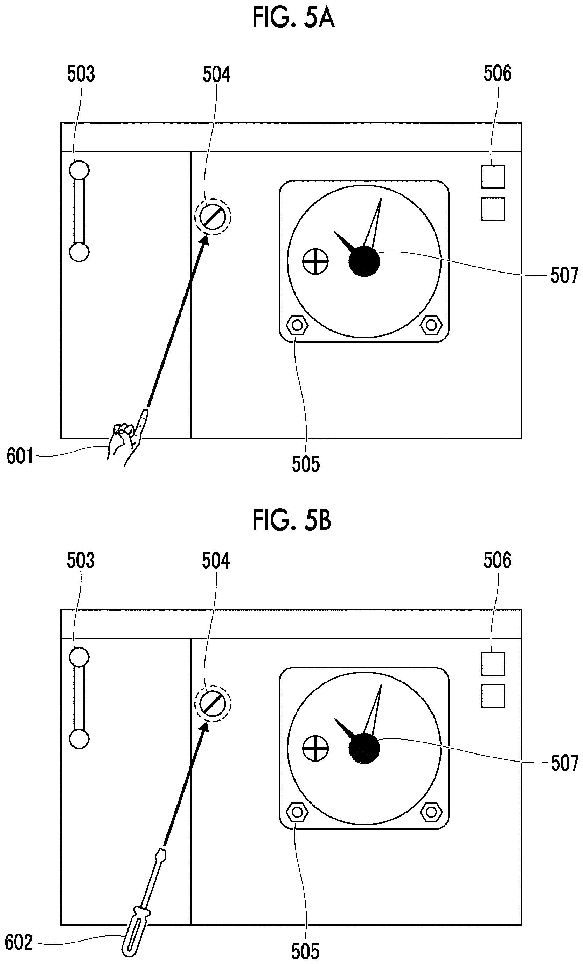

Fig. 5A and Fig. 5B are diagrams for explaining the processing example 2 in which one operation target object is specified by the CPU 21a, and are diagrams illustrating an example of the captured image captured by the imaging unit 12.

As illustrated in Fig. 5A and Fig. 5B, images of a handle 503, a bolt 504, a nut 505, a button 506, and a measuring instrument 507 that can be operated by the user are included in the captured image captured by the imaging unit 12. The CPU 21a recognizes the handle 503, the bolt 504, the nut 505, the button 506, and the measuring instrument 507 as operation target object through the image analysis of the captured image. Then, in step S103 described above, the CPU 21a determines that the plurality of operation target objects are included in the captured image.

In addition, in the example illustrated in Fig. 5A, an image of a user's hand 601 is included in the captured image. The CPU 21a recognizes the user's hand 601 as the object related to the user through the image analysis of the captured image in step S102. Further, the CPU 21a recognizes a posture of the user's hand 601 as a state of the object related to the user. In this example, the CPU 21a recognizes that the user's hand 601 is in a posture in which the index finger extends, and a direction indicated by the index finger of the user's hand 601 (in other words, the direction in which the index finger of the hand 601 extends) as a state of the object related to the user. In this example, the direction indicated by the index finger of the user's hand 601 is an example of a direction pointed by the user.

Then, based on the direction indicated by the object related to the user as a state of the user in the captured image, the CPU 21a specifies the operation target object located in the direction indicated by the object related to the user in the captured image from among the plurality of operation target objects as one operation target object.

In the captured image illustrated in Fig. 5A, the bolt 504, which is one of the operation target objects, is located in the direction indicated by the index finger of the user's hand 601 (the direction in which the index finger of the hand 601 extends). Therefore, the CPU 21a specifies the bolt 504 as one operation target object among the handle 503, the bolt 504, the nut 505, the button 506, and the measuring instrument 507, which are the plurality of operation target objects.

Here, in the example illustrated in Fig. 5A, the CPU 21a specifies one operation target object by using the posture (pointing direction) of the user's hand 601 as a state of the object related to the user, but the present invention is not limited to this.

In the example illustrated in Fig. 5B, an image of a driver 602, which is an instrument used by the user, is included in the captured image. The CPU 21a recognizes the driver 602 used by the user as the object related to the user through the image analysis of the captured image in step S102. Further, the CPU 21a recognizes a direction indicated by a tip of the driver 602 used by the user (in other words, a direction in which the tip of the driver 602 extends) as a state of the object related to the user. In this example, the direction indicated by the tip of the driver 602 is an example of a direction pointed by the user.

In the captured image illustrated in Fig. 5B, the bolt 504, which is one of the operation target objects, is located in the direction indicated by the tip of the driver 602 used by the user (the direction in which the tip of the driver 602 extends). Therefore, the CPU 21a specifies the bolt 504 as one operation target object among the handle 503, the bolt 504, the nut 505, the button 506, and the measuring instrument 507, which are the plurality of operation target objects.

As described above, in the present exemplary embodiment, among the plurality of operation target objects, the operation target object which is located in the direction pointed by the user is specified as one operation target object. Accordingly, for example, in a case where the user points to the operation target object with a hand or an instrument, it becomes easy to display the support information about the operation target object to be operated by the user. Then, it becomes easy for the user to refer to the support information of the operation target object to be operated.

Subsequently, another aspect of the processing of specifying one operation target object based on the relationship between the state of the user and each operation target object in the captured image by the CPU 21a will be explained.

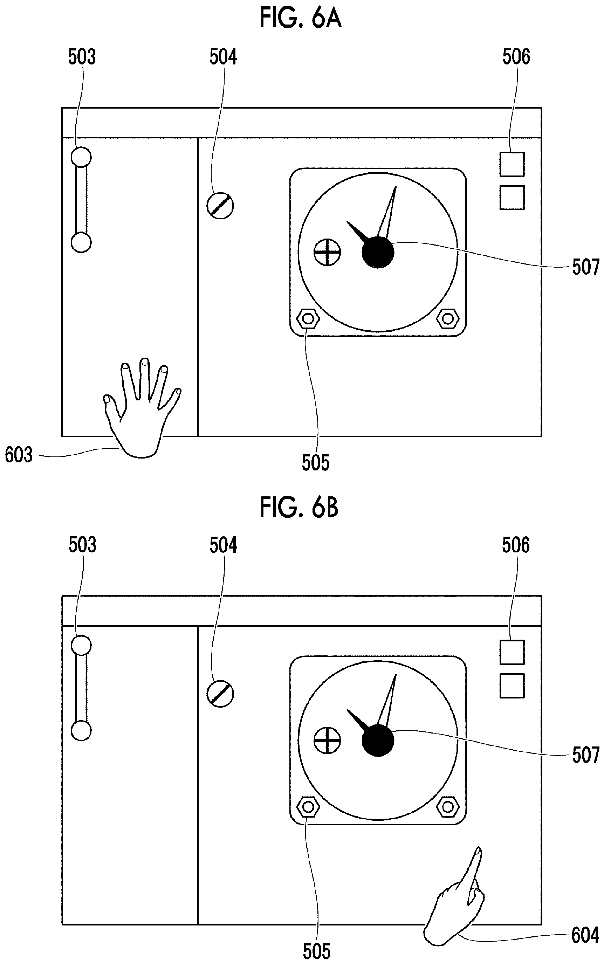

Fig. 6A and Fig. 6B are diagrams for explaining another aspect of the processing example 2 in which one operation target object is specified by the CPU 21a, and are diagrams illustrating an example of a captured image captured by the imaging unit 12. Fig. 6A and Fig. 6B are the same as Fig. 5A except for the states of the hands 603 and 604 which are examples of the objects related to the user.

In Fig. 5A and Fig. 5B, the processing in which the CPU 21a specifies the operation target object, as one operation target object, in the direction pointed by the user in the captured image as a state of the user has been explained. On the other hand, in the examples illustrated in Fig. 6A and Fig. 6B, the CPU 21a specifies one operation target object according to a relationship between the postures of the user's hands 603 and 604 which is an example of the state of the user and a plurality of operation target objects in the captured image.

In the example illustrated in Fig. 6A and Fig. 6B, the CPU 21a recognizes the postures of the user's hands 603 and 604 as the state of the object related to the user through the image analysis of the captured image in step S102.

In the example illustrated in Fig. 6A, the CPU 21a recognizes that the user's hand 603 is in an open posture with the palm of the hand facing the back side in a depth direction of the captured image, as the state of the object related to the user.

In addition, in the example illustrated in Fig. 6B, the CPU 21a recognizes that the user's hand 604 is in a posture in which the index finger extends, as the state of the object related to the user.

Then, the CPU 21a specifies one operation target object from among the plurality of operation target objects based on the postures of the user's hands 603 and 604, as the state of the user in the captured image.

In the example illustrated in Fig. 6A, the user's hand 603 is in the open posture as described above. Among the plurality of operation target objects, the CPU 21a specifies an operation target object that can be operated in a state where a hand is opened, more specifically, the handle 503 that can be operated by being gripped by an open hand, as one operation target obj ect.

On the other hand, in the example illustrated in Fig. 6B, as described above, the user's hand 604 is in a posture in which the index finger extends. Among the plurality of operation target objects, the CPU 21a specifies an operation target object that can be operated in a posture in which the index finger extends, more specifically, the button 506 that can be pressed by the extended index finger, as one operation target object.

In this way, by specifying one operation target object from among the plurality of operation target objects according to the posture of the user wearing the display device 10, it becomes easy to specify the operation target object that the user is trying to perform the operation as one operation target object. In addition, even in a case where the user does not perform a special operation such as pointing to the operation target object, it becomes easy to specify the operation target object that the user is trying to perform the operation among the plurality of operation target objects, as one operation target object. Accordingly, it becomes easy to display the support information about the operation target object that the user is trying to perform the operation. Then, it becomes easy for the user to refer to the support information of the operation target object to be operated.

In addition, the CPU 21a may specify one operation target object according to the movement of the object related to the user in the captured image as the state of the user.

For example, in the captured image illustrated in Fig. 6A, in a case where the user's hand 603 is moving in a horizontal direction, the CPU 21a can specify the handle 503 that can be operated by moving the hand in the horizontal direction among the plurality of operation target objects, as one operation target object.

On the other hand, for example, in the captured image illustrated in Fig. 6A, in a case where the user's hand 603 is moving in the depth direction from the front side to the back side in the drawing, the CPU 21a may specify the button 506 that can be operated by moving the hand in the depth direction among the plurality of operation target objects, as one operation target object.

### (Processing Example 3)

Processing in which the CPU 21a specifies one operation target object based on a relationship between an instrument used by the user and each operation target object in the captured image as a relationship between the user and each operation target object in the captured image will be explained.

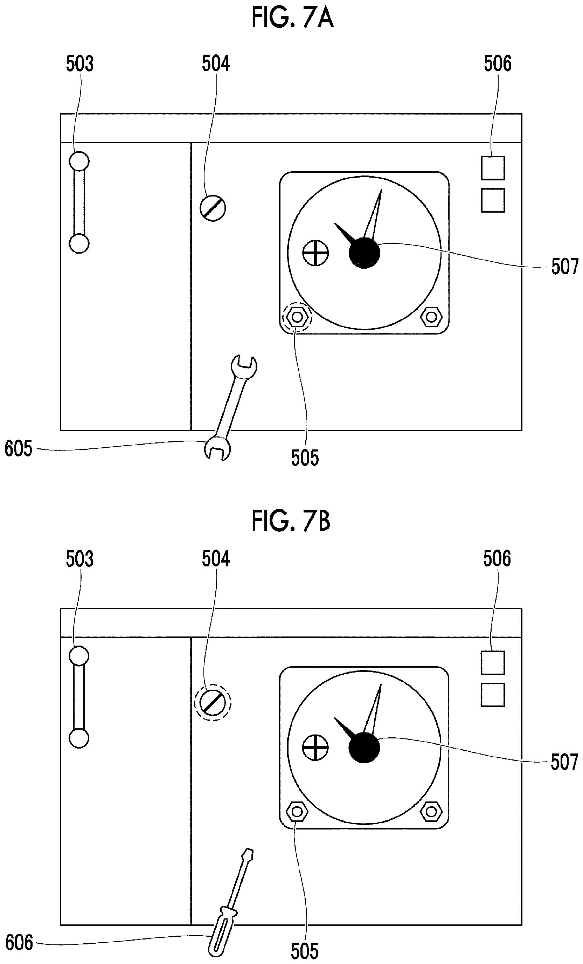

Fig. 7A and Fig. 7B are diagrams for explaining a processing example 3 in which one operation target object is specified by the CPU 21a, and are diagrams illustrating an example of the captured image captured by the imaging unit 12. In addition, Fig. 7A and Fig. 7B are the same as Fig. 5A except that the instrument used by the user is captured as the object related to the user.

In the example illustrated in Fig. 7A, an image of a spanner 605, which is an instrument used by the user, is included in the captured image. The CPU 21a recognizes the spanner 605 used by the user as the object related to the user through the image analysis of the captured image in step S102. Then, the CPU 21a specifies one operation target object from among the plurality of operation target objects, based on the relationship between the instrument used by the user and each operation target object. For example, the CPU 21a specifies one operation target object from among the plurality of operation target objects, based on a relationship between each operation target object stored in advance in the storage unit 22 and an instrument that can operate each operation target object.

In this example, the CPU 21a specifies the nut 505 that can be operated by the spanner 605 among the plurality of operation target objects as one operation target object.

In addition, in the example illustrated in Fig. 7B, an image of a driver 606, which is an instrument used by the user, is included in the captured image. The CPU 21a recognizes the driver 606 used by the user as the object related to the user through the image analysis of the captured image in step S102. Then, the CPU 21a specifies the bolt 504 that can be operated by the driver 606 among the plurality of operation target objects as one operation target object.

In this way, by specifying one operation target object from among the plurality of operation target objects according to the instrument used by the user wearing the display device 10, it becomes easy to specify the operation target object that the user is trying to perform the operation as one operation target object. In addition, even in a case where the user does not perform a special operation such as pointing to the operation target object, it becomes easy to specify the operation target object that the user is trying to perform the operation among the plurality of operation target objects, as one operation target object. Accordingly, it becomes easy to display the support information about the operation target object that the user is trying to perform the operation. Then, it becomes easy for the user to refer to the support information of the operation target object to be operated.

### (Processing Example 4)

By the way, the CPU 21a may not be able to specify one operation target object based on the relationship between the user and each operation target object. In a case where the CPU 21a of the present exemplary embodiment cannot specify one operation target object based on the relationship between the user and each operation target object in the captured image, the CPU 21a may specify one operation target object based on a position of each operation target object in the captured image.

Subsequently, as a processing example 4 in which the CPU 21a specifies one operation target object, processing of specifying one operation target object based on the position of each operation target object in the captured image will be explained.

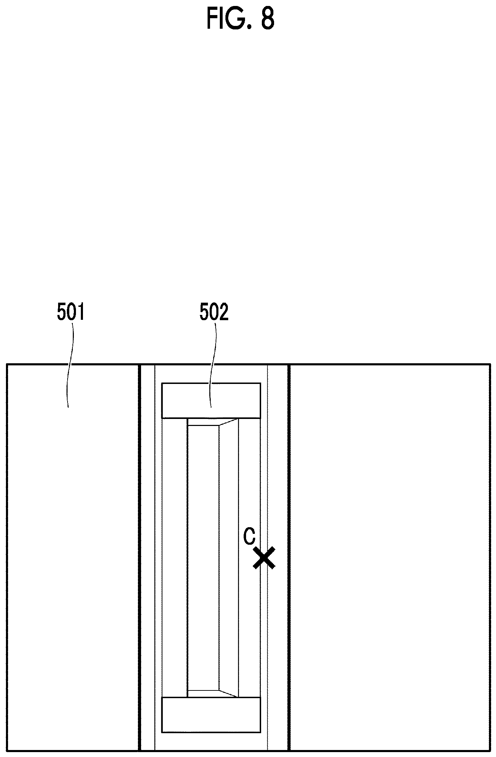

Fig. 8 is a diagram for explaining a processing example 4 in which one operation target object is specified by the CPU 21a, and is a diagram illustrating an example of the captured image captured by the imaging unit 12.

As illustrated in Fig. 8, in the captured image, images of a glass cover 501 and a handle 502 as operation target objects that can be operated by the user are included. The CPU 21a recognizes the glass cover 501 and the handle 502 as operation target objects through image analysis of the captured image in step S102 described above. Then, in step S103 described above, the CPU 21a determines that the plurality of operation target objects are included in the captured image.

In addition, in the example illustrated in Fig. 8, in the captured image, an object related to the user, such as a user's hand and an instrument used by the user, is not included. For this reason, the CPU 21a does not recognize the object related to the user through the image analysis of the captured image in step S102.

In this way, in a case where the object related to the user is not recognized in the captured image, the CPU 21a specifies one operation target object based on the position of each operation target object in the captured image, assuming that one operation target object cannot be specified based on the relationship between the user and each operation target object in the captured image.

Specifically, the CPU 21a specifies an operation target object close to a center position (a position indicated by the reference numeral C in Fig. 8) in the captured image among the plurality of operation target objects included in the captured image, as one operation target object. In the captured image illustrated in Fig. 8, the handle 502 is located closer to a center position C compared to the glass cover 501. Therefore, the CPU 21a specifies the handle 502 among the glass cover 501 and the handle 502, which are the plurality of operation target objects, as the one operation target object.

Here, as described above, the user who intends to perform the operation of the operation target object faces the operation target object and attempts to visually recognize the operation target object through the display device 10. In this case, in the captured image captured by the imaging unit 12 of the display device 10, there is a high possibility that the operation target object to be operated by the user is located at a position close to the center.

In the present exemplary embodiment, by specifying the operation target object close to the center position in the captured image as one operation target object, it becomes easy to specify the operation target object to be operated by the user, as the one operation target object. Accordingly, it becomes easy to display the support information about the operation target object that the user is trying to perform the operation. Then, it becomes easy for the user to refer to the support information of the operation target object to be operated.

In this example, the CPU 21a specifies the operation target object close to the center position in the captured image as one operation target object, but the position in the captured image is not limited to the center position as long as one operation target object is specified based on the position in the captured image.

For example, as a position in the captured image, an operation target object close to the dominant hand side (for example, in a case of a right-handed person, the right side in the captured image) of the user wearing the display device 10 in the captured image may be specified as one operation target object.

### (Processing Example 5)

In addition, in a case where the CPU 21a of the present exemplary embodiment cannot specify one operation target obj ect based on the relationship between the user and each operation target object in the captured image, the CPU 21a can receive a selection of the one operation target object from among the plurality of operation target objects from the user.

For example, the CPU 21a displays a selection screen for receiving the selection of the one operation target object from among the plurality of operation target objects on the display unit 11 of the display device 10. Then, the CPU 21a specifies the one operation target object from among the plurality of operation target objects included in the captured image according to an operation on the selection screen of the user.

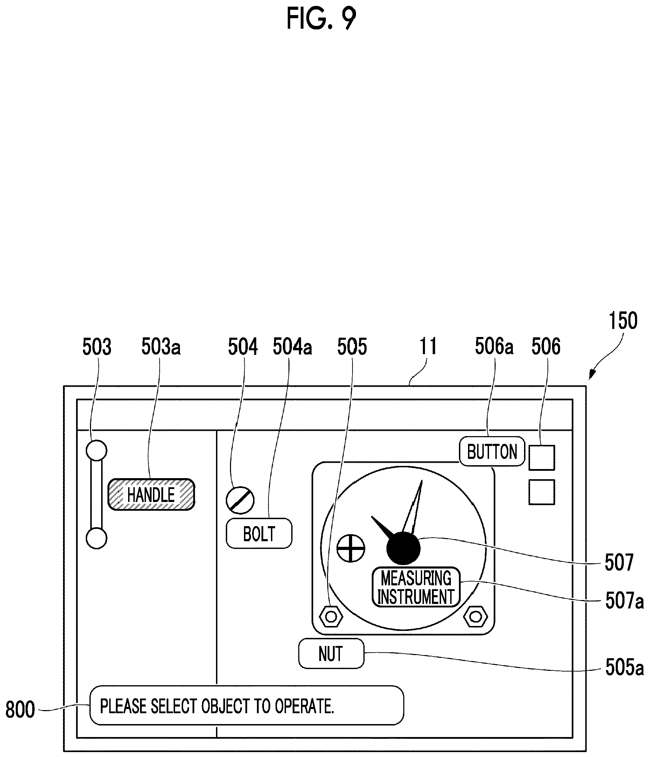

Fig. 9 is a diagram illustrating an example of a screen displayed on the display unit 11 of the display device 10 in a case where one operation target object cannot be specified based on a relationship between the user and each operation target object in the captured image.

As illustrated in Fig. 9, in the selection screen displayed on the display unit 11, the captured image 150 captured by the imaging unit 12 is included. The captured image 150 included in the selection screen of Fig. 9 is the same as the captured image illustrated in Fig. 5A described above. Therefore, in the captured image 150 of Fig. 9, the handle 503, the bolt 504, the nut 505, the button 506, and the measuring instrument 507 are included as the plurality of operation target objects recognized through the image analysis by the CPU 21a.

In addition, as illustrated in Fig. 9, on the screen displayed on the display unit 11, icons 503a, 504a, 505a, 506a, and 507a for selecting one operation target object are displayed around the image of the handle 503, the bolt 504, the nut 505, the button 506, and the measuring instrument 507 in the captured image 150. Further, as illustrated in Fig. 9, on the screen displayed on the display unit 11, an image 800 prompting the user to make a selection is displayed, which consists of a sentence "please select an object to operate.".

The user wearing the display device 10 selects icons 503a to 507a of the operation target object to be operated from among the icons 503a to 507a corresponding to each operation target object included in the captured image 150 displayed on the display unit 11. In this example, the user is selecting, for example, the icon 503a of the handle 503. In the display unit 11, the selected icon (in this example, the icon 503a) is highlighted.

The CPU 21a can receive the selection of the icons 503a to 507a by, for example, an operation on an operator, which is not illustrated and is provided on the display device 10 (for example, an operation button), a gesture using the user's hand, and the like.

The CPU 21a specifies the operation target object selected by the user among the plurality of operation target objects included in the captured image 150, as the one operation target object. In this example, the CPU 21a specifies the handle 503 for which the icon 503a is selected by the user among the plurality of operation target objects, as the one operation target obj ect.

In this way, by receiving the selection, it becomes easy to specify the operation target object to be operated by the user or the operation target object that the user desires to display the support information, as the one operation target object.

In the processing example 4 or processing example 5, it is assumed that the CPU 21a cannot specify the one operation target object based on the relationship between the user and each operation target object in the captured image, a case where the user's hand or the instrument used by the user is not included in the captured image and the CPU 21a does not recognize the object related to the user is exemplified. However, the present invention is not limited to the case where the one operation target object cannot be specified based on the relationship between the user and each operation target object. In the following cases, the CPU 21a may not be able to specify the one operation target object based on the relationship between the user and each operation target object.

For example, a case where a plurality of user's hands and the instruments used by the user are included in the captured image and the CPU 21a cannot specify one object related to the user is exemplified.

In addition, a case where an image of the user's hand or the instrument used by the user is unclear in the captured image, and the CPU 21a cannot recognize the object related to the user through the image analysis of the captured image is exemplified.

In addition, in a case where there are a plurality of operation target objects having the same relationship with the user in the captured image, the CPU 21a may not be able to specify the one operation target object based on the relationship between the user and each operation target object. In a case where there are the plurality of operation target objects having the same relationship with the user, for example, in the captured image, in a case where the distance between each operation target object and the user is equal to each other, the overlap between each operation target object and the user is equal to each other.

In addition, in a case where a plurality of operation target objects included in the captured image are complicated, the CPU 21a may not be able to specify the one operation target object based on the relationship between the user and each operation target object.

As a case where the plurality of operation target objects are complicated, a case where the number of operation target objects included in the captured image exceeds a predetermined number is exemplified. In a case where there are many operation target objects included in the captured image, the processing in which the CPU 21a specifies the one operation target object based on the relationship between the user and each operation target object tends to be complicated. In addition, in a case where there are many operation target objects included in the captured image, even in a case where the one operation target object is specified based on the relationship between the user and each operation target object, it becomes easy to specify the operation target object not to be operated by the user, as the one operation target object.

### (Processing Example 6)

In addition, in the above-described processing example 1 to processing example 5, the processing in which the CPU 21a specifies one operation target object from among the plurality of operation target objects based on the captured image has been explained, but the processing in which the CPU 21a specifies one operation target object is not limited to this. For example, in a device including a plurality of operation target objects that can be operated by the user, in order to implement a function of the device, operations of the plurality of operation target objects may be sequentially performed in a predetermined order. In a case where the plurality of operation target objects are included in the captured image, the CPU 21a of the present exemplary embodiment may acquire the operation state of each operation target object and specify one operation target object based on the operation state of each operation target object.

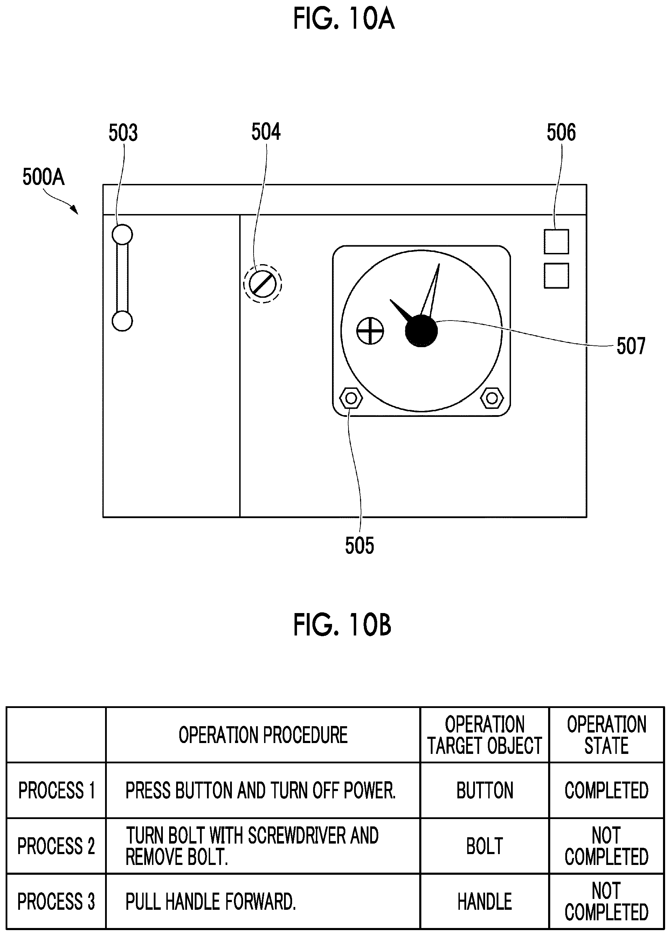

Fig. 10A and Fig. 10B are diagrams for explaining processing in which the CPU 21a specifies one operation target object based on an operation state of each operation target object. Fig. 10A is a diagram illustrating an example of the captured image captured by the imaging unit 12, and Fig. 10B is a diagram illustrating an operation procedure of a device 500A described later having the plurality of operation target objects, and an operation state of each operation target object.

As illustrated in Fig. 10A, images of a handle 503, a bolt 504, a nut 505, a button 506, and a measuring instrument 507 that can be operated by the user are included in the captured image captured by the imaging unit 12 in the same manner as in the example illustrated in Fig. 5A or the like. In this example, the handle 503, the bolt 504, the nut 505, the button 506, and the measuring instrument 507 are provided in one device 500A.

The CPU 21a recognizes the handle 503, the bolt 504, the nut 505, the button 506, and the measuring instrument 507 as operation target object through the image analysis of the captured image. Then, in step S 103 described above, the CPU 21a determines that the plurality of operation target objects are included in the captured image.

In addition, the CPU 21a acquires information related to an operation procedure of the device 500A including the plurality of operation target objects from the storage unit 22. In this example, as illustrated in Fig. 10B, the operation procedure of the device 500A includes Process 1 of operating the button 506, which is one of the operation target objects, Process 2 of operating the bolt 504, and Process 3 of operating the handle 503. In addition, the CPU 21a acquires the operation state of each operation target object of Process 1 to Process 3 from the device 500A through the communication I/F 23. In this example, as illustrated in Fig. 10B, the operation on the button 506 in Process 1 is completed, while the operation on the bolt 504 in Process 2 and the operation on the handle 503 in Process 3 are not completed.

The CPU 21a of the present exemplary embodiment specifies one operation target object from among the plurality of operation target objects, based on the operation state of each operation target object. Specifically, the CPU 21a specifies one operation target object from among the operation target objects that are included in the operation procedure and for which a predetermined operation has not been completed, among the plurality of operation target objects.

In this example, the CPU 21a specifies the one operation target object from among the bolt 504 in which the operation in Process 2 is not completed and the handle 503 in which the operation in Process 3 is not completed, among the plurality of operation target objects.

Here, as in the present exemplary embodiment, in a case where there are a plurality of operation target objects for which the predetermined operation has not been completed, the CPU 21a can specify the operation target object which needs to be operated first in accordance with the operation procedure of the device 500A including the operation target object, as the one operation target object. In this example, the CPU 21a specifies the bolt 504 in Process 2, which needs to be operated first, as one operation target object.

In this way, by specifying the one operation target object according to the operation state of each operation target object, it becomes easy to display the support information about the operation target object, which is desired to be operated in the operation procedure of the device 500A. Accordingly, it becomes easy for the user to perform the operation on the operation target object in accordance with the operation procedure of the device 500A. In addition, the user is prevented from erroneously operating an operation target object that does not require the operation, such as an operation target object for which the operation has already been completed.

In this example, the CPU 21a acquires the operation state of each operation target object from the device 500A, but the present invention is not limited to this. The CPU 21a may, for example, grasp the state of each operation target object through the image analysis of the captured image and acquire the operation state of each operation target object.

In addition, in this example, a case where the handle 503, the bolt 504, the nut 505, the button 506, and the measuring instrument 507, which are the plurality of operation target objects, are provided in one device 500A has been exemplified, but the present invention is not limited to this. The plurality of operation target objects may be separately provided in a plurality of devices. In this case, the CPU 21a may acquire the operation state of each operation target object from the plurality of devices provided with the operation target object.

In addition, each processing in which the CPU 21a specifies one operation target object from among the plurality of operation target objects, which is described above, may be performed by combining the plurality of types of processing. For example, in a case where the hand of the user who does not have the instrument in the captured image is recognized, the CPU 21a may specify one operation target object according to a distance between the user's hand and the plurality of operation target objects, and in a case where the instrument to be used by the user is recognized, the CPU 21a may specify the operation target object that can be operated by the instrument among the plurality of operation target objects, as the one operation target object.

### (Processing of Displaying Support Information)

Subsequently, in step S106 and step S107, processing of displaying the support information on the display unit 11 of the display device 10 performed by the CPU 21a of the display control device 20 will be explained.

As described above, the CPU 21a selects the support information of specified one operation target object from the support information associated with each operation target object stored in the storage unit 22, and displays the support information on the display unit 11 of the display device 10.

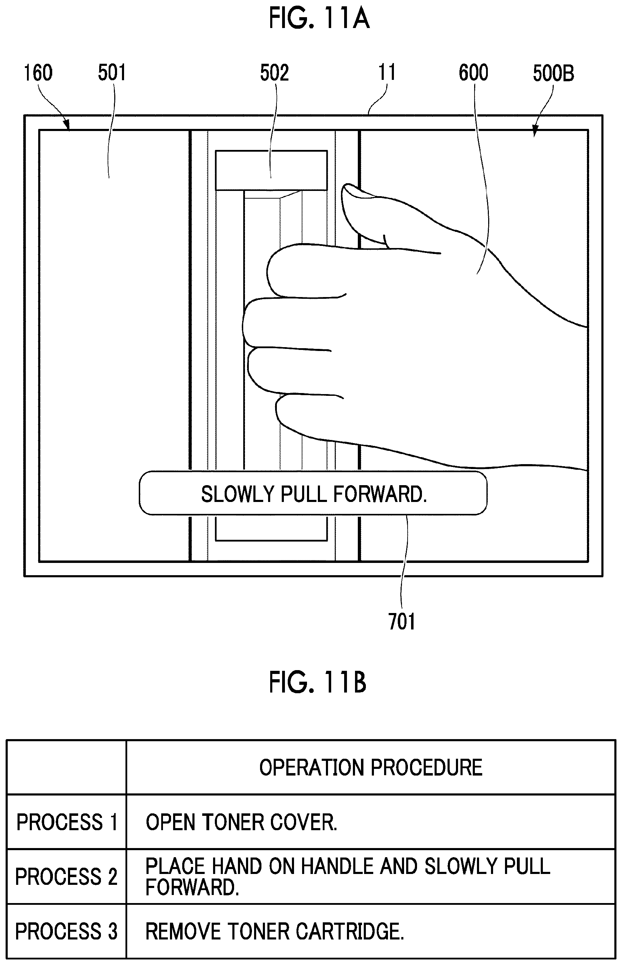

Fig. 11A and Fig. 11B are diagrams for explaining processing in which the CPU 21a displays support information of one operation target object on the display unit 11 of the display device 10 (refer to Fig. 1). Fig. 11A is a diagram illustrating an example of the screen displayed on the display unit 11 of the display device 10. In addition, Fig. 11B is a diagram for explaining an example of processing of selecting the support information to be displayed on the display unit 11, and is a diagram illustrating an operation procedure of a device 500B, which will be described later, including one operation target object.

As illustrated in Fig. 11A, a captured image 160 captured by the imaging unit 12 is displayed on the display unit 11. The captured image 160 is displayed on the display unit 11 so as to overlap the real space in which the user wearing the display device 10 faces the real space through the display device 10.

In this example, in the same manner as the captured image illustrated in Fig. 4, the captured image 160 in Fig. 11A includes the glass cover 501 and the handle 502 as the operation target objects. In this example, the glass cover 501 and the handle 502 are provided in one device 500B. The device 500B is, for example, an image forming device. In addition, the captured image 160 in Fig. 11A includes a user's hand 600 gripping the handle 502 as the object related to the user.

Here, the explanation is made by assuming that the CPU 21a specifies the handle 502 among the glass cover 501 and the handle 502 which are the plurality of operation target objects as one operation target object in step S105 explained above.

As illustrated in Fig. 11A, on the display unit 11, a support image 701 that is an example of support information for supporting the operation of the one operation target object by superimposing the information on the captured image 160 captured by the imaging unit 12 and that supports the operation of the handle 502 is displayed. In addition, on the display unit 11, a sentence "slowly pull forward." is displayed as the support image 701 that supports the operation of the handle 502.

For example, the CPU 21a selects the support information by the following processing and displays the support information on the display unit 11 of the display device 10.

First, the CPU 21a acquires information related to an operation procedure of the device 500B including the operation on the one operation target object specified in step S104 or step S105 from the storage unit 22. In this example, the CPU 21a acquires information related to a toner exchange procedure as information related to the operation procedure of the device 500B. As illustrated in Fig. 11B, the operation procedure of the device 500B includes Process 1 consisting of a sentence "open a toner cover.", Process 2 consisting of a sentence "place a hand on a handle and slowly pull forward.", and Process 3 consisting of a sentence "remove a toner cartridge".

The CPU 21a selects the process including the operation on one operation target object from among the processes included in the acquired operation procedure of the device 500B. In this example, the CPU 21a selects Process 2, which is a process including the operation on the handle 502, which is one operation target object. Next, the CPU 21a extracts the support information (support image 701) corresponding to the selected Process 2 from the support information stored in the storage unit 22. Then, the CPU 21a displays the extracted support image 701 on the display unit 11 of the display device 10.

Accordingly, as illustrated in Fig. 11A, the support image 701 that supports the operation with respect to the specified one operation target object is displayed on the display unit 11. Then, the user wearing the display device 10 can perform the operation of the handle 502, which is the one operation target object, by referring to the support image 701 of the display unit 11.

In addition, the CPU 21a may display different support information on the display unit 11 of the display device 10 according to the relationship between the state of the user and the one operation target object in the captured image.

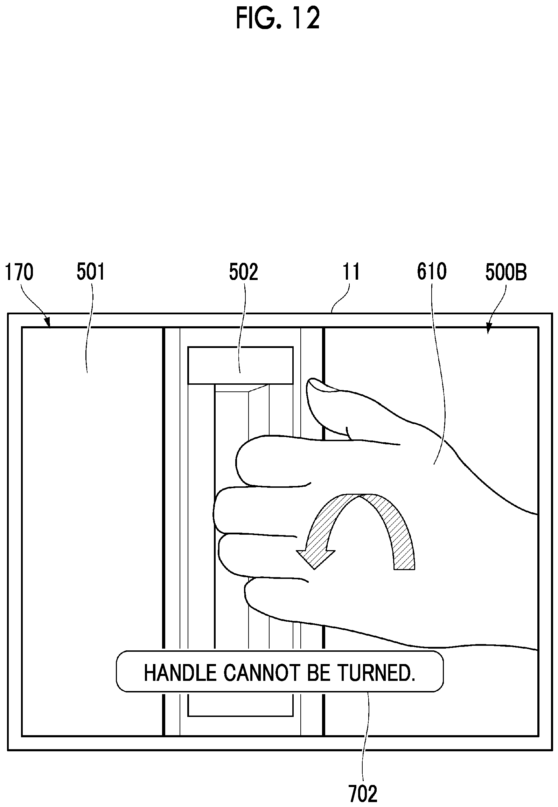

Fig. 12 is a diagram illustrating another example of the screen displayed on the display unit 11 of the display device 10. The screen illustrated in Fig. 12 is the same as the screen illustrated in Fig. 11A, except for the state of the user's hand 610 included in the captured image 170 and the support information displayed superimposed on the captured image 170.

In the captured image 170 in Fig. 12, the glass cover 501 and the handle 502 provided in the device 500B as the operation target objects are included. In addition, in the captured image 170 in Fig. 12, an image of the user's hand 610 is included as the object related to the user. In the captured image 170 in Fig. 12, the user attempts to turn the handle 502 by rotating the hand 610 gripping the handle 502 in a direction of the arrow.

As illustrated in Fig. 11B, in Process 2 of the operation procedure of the device 500B, the operation performed on the handle 502 is "place a hand on a handle and slowly pull forward.". That is, the state of the user included in the captured image 170 illustrated in Fig. 12, more specifically, the operation of the user's hand 610 is different from the operation on the handle 502 in Process 2 of the operation procedure.

In this case, the CPU 21a displays the support information indicating that the operation of the user's hand 610 is different from the operation procedure, as support information for supporting the operation of the handle 502 which is one operation target object on the display unit 11. In this example, as illustrated in Fig. 12, the CPU 21a displays a sentence "a handle cannot be turned" as the support image 702 that supports the operation of the handle 502 on the display unit 11.

In this way, by displaying the support information on the display unit 11 according to the state of the user in the captured image, for example, in a case where the user attempts to perform an erroneous operation on the operation target object, the user can grasp that the operation is erroneous, and the continuation of the erroneous operation is suppressed.

In this example, the operation of the user's hand 610 in the captured image 170 is an example of the state of the user. In addition, the relationship between the operation of the user's hand 610 in the captured image 170 and the content of Process 2 including the operation on the handle 502 in the operation procedure of the device 500B is an example of a relationship between the state of the user and the one operation target object in the captured image.

In addition, the CPU 21a may display different support information on the display unit 11 of the display device 10 according to the state of the one operation target object or the state of a device or the like including the one operation target object.

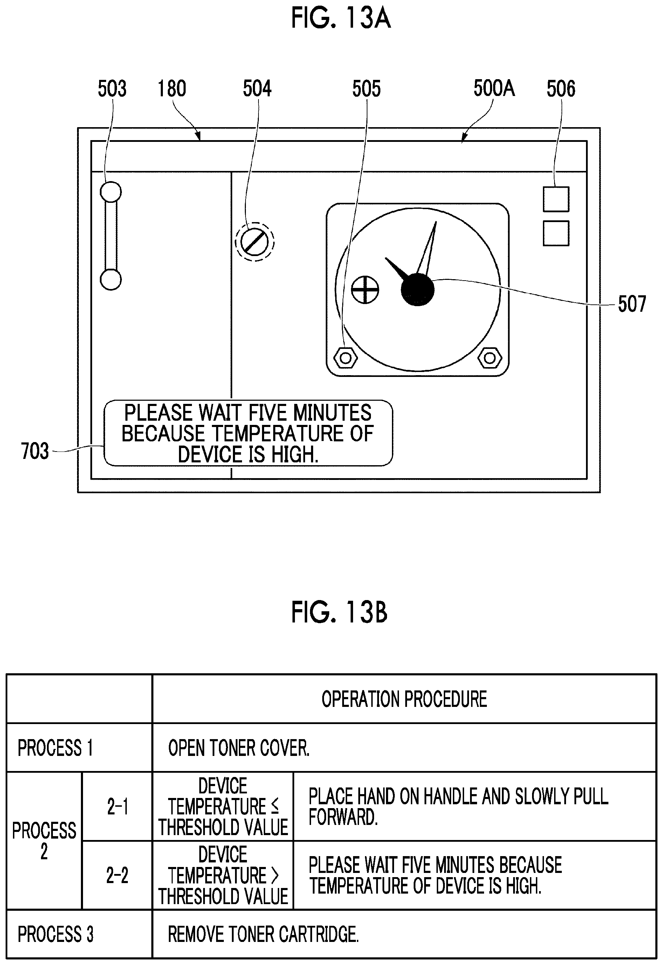

Fig. 13A and Fig. 13B are diagrams for explaining processing in which the CPU 21a displays different support information on the display device 10 according to the state of the device including one operation target object. Fig. 13A is a diagram illustrating an example of the screen displayed on the display unit 11 of the display device 10, and Fig. 13B is a diagram for explaining an example of processing of selecting support information to be displayed on the display unit 11 and is a diagram illustrating an example of the operation procedure of the device 500A including the one operation target object.

In the captured image 180 illustrated in Fig. 13A, in the same manner as the captured image illustrated in Fig. 5A, the handle 503, the bolt 504, the nut 505, the button 506, and the measuring instrument 507 are included in the device 500A as operation target objects.

Here, the explanation is based on the assumption that the CPU 21a specifies the handle 503 as the one operation target object among the handle 503, the bolt 504, the nut 505, the button 506, and the measuring instrument 507, which are the plurality of operation target objects in step S105 explained above.

The CPU 21a acquires information related to a toner exchange procedure as an operation procedure of the device 500A. As illustrated in Fig. 13B, the operation procedure of the device 500A includes three processes of Process 1, Process 2, and Process 3. Then, Process 2 including the operation on the handle 503 is divided into Process 2-1 consisting of a sentence "place a hand on a handle and slowly pull forward" performed in a case where a temperature of the device 500A is equal to or lower than a predetermined threshold value, and Process 2-2 consisting of a sentence "wait five minutes because a temperature of a device is high." performed in a case where the temperature of the device 500A exceeds the threshold value, according to the temperature of the device 500A.

In a case where the handle 503 is specified as the one operation target object from among the plurality of operation target objects, the CPU 21a acquires information related to the temperature of the device 500A from the device 500A through the communication I/F 23. Then, the CPU 21a extracts the support information according to the temperature of the device 500A from the support information stored in the storage unit 22, and displays the support information on the display unit 11 of the display device 10. For example, in a case where the temperature of the device 500A is equal to or lower than the threshold value, the CPU 21a displays the support information corresponding to Process 2-1 (for example, a sentence such as "place hand on handle and slowly pull forward."). On the other hand, in a case where the temperature of the device 500A exceeds the threshold value, the CPU 21a, as illustrated in Fig. 13A, displays the support image 703 with "please wait five minutes because a temperature of a device is high." which is support information corresponding to Process 2-2 on the display unit 11.

In this way, by displaying the support information according to the state of the specified one operation target object or the state of the device including the one operation target object, it becomes easy for the user to perform an operation appropriate to the one operation target object or the state of the device including the one operation target object.

In addition, for example, the user is prevented from touching the operation target object in a state where it is not desired to touch the operation target object, such as the operation target object is at a high temperature, or from performing the operation in a state where the operation target object cannot receive the operation, such as before the device is activated.

In this example, the state of the device 500A including the handle 503 which is the one operation target object is acquired from the device 500A through the communication I/F 23, but the present invention is not limited to this. The CPU 21a may acquire, for example, a state of the device 500A or a state of the one operation target object included in the device 500A by analyzing the captured image captured by the imaging unit 12 of the display device 10. In addition, the state may be acquired from another device provided outside the device 500A and monitoring the state of the device 500A.

In addition, in the present exemplary embodiment, as the support information to be displayed on the display unit 11 of the display device 10, a support image consisting of sentences explaining an operation method of the operation target object or the like is exemplified, but the present invention is not limited to this. The support information may be, for example, an image such as a symbol indicating an operation method of the operation target object. In addition, the support information may be a still image or a moving image. Furthermore, the support information may be in a form in which a plurality of still images are sequentially displayed over time.

In the display system 1 explained above, processing of specifying one operation target object from among the operation target objects included in the captured image, and a display control of the support information on the display unit 11 of the display device 10 are performed by the display control device 20 connected to the display device 10, but but the present invention is not limited to this. That is, in the display device 10, an information processing unit that performs a part or all of the processing performed by the CPU 21a described above may be included.

### (Program)

The processing performed by the CPU 21a of the present exemplary embodiment explained above is performed by, for example, a program such as application software.

Therefore, a program that implements the processing performed by the CPU 21a of the present exemplary embodiment can be regarded as a program causing a computer that performs a control to display support information for supporting the operation of the operation target object included in the captured image that is obtained by imaging the real space by superimposing the support information on the real space or the captured image to implement a function of displaying the support information of one operation target object having a high priority of the operation by the user from among the plurality of operation target objects included in the captured image.

Although the present exemplary embodiment has been explained above, the present invention is not limited to the exemplary embodiment described above. In addition, the effects according to the exemplary embodiment of the invention are not limited to the description in the above-described exemplary embodiment. Various modifications and alternative configurations are involved in the present invention without departing from the technical scope of the present invention.

### (Supplementary Note)

### (((1)))

A display control device comprising:
a processor configured to perform a control to display support information for supporting an operation of an operation target object included in a captured image that is obtained by imaging a real space by superimposing the support information on the real space or the captured image,
wherein the processor is configured to:
   display the support information of one operation target object having a high priority of the operation by a user from among a plurality of operation target objects included in the captured image.

### (((2)))

The display control device according to (((1))), wherein the processor is configured to:
specify the one operation target object based on a relationship between the user and each operation target object in the captured image.

### (((3)))

The display control device according to (((2))), wherein the processor is configured to:
set the operation target object having a short distance to the user in the captured image among the plurality of operation target objects, as the one operation target object.

### (((4)))

The display control device according to (((2))), wherein the processor is configured to:
set the operation target object in a direction pointed by the user in the captured image among the plurality of operation target objects, as the one operation target object.

### (((5)))

The display control device according to any one of (((2))) to (((4))), wherein the processor is configured to:
specify the one operation target object based on a relationship between an instrument used by the user and the operation target object as the relationship between the user and each operation target object.

### (((6)))

The display control device according to any one of (((2))) to (((5))), wherein the processor is configured to:
specify the one operation target object from a position of each operation target object in the captured image in a case where the processor cannot specify the one operation target object from the relationship between the user and each operation target object in the captured image.

### (((7)))

The display control device according to (((6))), wherein the processor is configured to:
set the operation target object that is located close to a center in the captured image among the plurality of operation target objects, as the one operation target object.

### (((8)))

The display control device according to any one of (((2))) to (((5))), wherein the processor is configured to:
receive a selection of the one operation target object from among the plurality of operation target objects, in a case where the processor cannot specify the one operation target object from the relationship between the user and each operation target object in the captured image.

### (((9)))

The display control device according to any one of (((6))) to (((8))), wherein the processor is configured to:
determine that the one operation target object cannot be specified in a case where the number of the operation target objects in the captured image exceeds a predetermined number.

### (((10)))

The display control device according to (((1))), wherein the processor is configured to:
specify the one operation target object based on an operation state of the plurality of operation target objects.

### (((11)))

The display control device according to (((10))), wherein the processor is configured to:
specify the one operation target object from among the operation target objects for which a predetermined operation has not been completed, among the plurality of operation target objects.

### (((12)))

The display control device according to any one of (((1))) to (((11))), wherein the processor is configured to:
display the support information according to a state of the one operation target object.

### (((13)))

The display control device according to any one of (((1))) to (((12))), wherein the processor is configured to:
display the support information according to a relationship between a state of the user and the one operation target object in the captured image.

### (((14)))

A display system comprising:
an imager that images a real space;
a display that displays an image; and
a processor that is configured to display support information for supporting an operation of an operation target object included in a captured image captured by the imager on the display by superimposing the support information on the real space or the captured image,
wherein the processor is configured to:
   display the support information of one operation target object having a high priority of the operation by a user from among a plurality of operation target objects included in the captured image, on the display.

### (((15)))

A program causing a computer that performs a control to display support information for supporting an operation of an operation target object included in a captured image that is obtained by imaging a real space by superimposing the support information on the real space or the captured image, to implement a function of:
displaying the support information of one operation target object having a high priority of the operation by a user from among a plurality of operation target objects included in the captured image.

With the display control device according to (((1))), it is possible to provide a display control device or the like that displays support information so that the operation target object can be operated in a case where there are the plurality of operation target objects.

With the display control device according to (((2))), it becomes easy to display the support information about the operation target object to be operated by the user as compared with a case where the one operation target object is not specified based on the relationship between the user and each operation target object in the captured image.

With the display control device according to (((3))), it becomes easy to display the support information about the operation target object to be operated by the user as compared with a case where the operation target object having a short distance to the user in the captured image is not set as the one operation target object.

With the display control device according to (((4))), it becomes easy to display the support information about the operation target object to be operated by the user as compared with a case where the operation target object in the direction pointed by the user in the captured image is not set as the one operation target object.

With the display control device according to (((5))), it becomes easy to display the support information about the operation target object to be operated by the user as compared with a case where the one operation target object is not specified based on the relationship between the instrument used by the user and the operation target object.

With the display control device according to (((6))), it is possible to display the support information by specifying the one operation target object even in a case where the one operation target object cannot be specified from the relationship with the user.

With the display control device according to (((7))), it becomes easy to display the support information about the operation target object to be operated by the user as compared with a case where the operation target object that is located close to the center in the captured image is not specified as the one operation target object.

With the display control device according to (((8))), it becomes easy to display the support information about the operation target object in which the user desires to display the support information as compared with a case where the selection of the one operation target object from among the plurality of operation target objects is not received.

With the display control device according to (((9))), it becomes difficult to specify the operation target object not to be operated by the user as the one operation target object in a case where the number of operation target objects exceeds the predetermined number as compared with a case of specifying the one operation target object from the relationship between the user and each operation target object in the captured image.

With the display control device according to (((10))), it becomes easy to display the support information about the operation target object that requires the operation by the user as compared with a case where the one operation target object is not specified based on the operation state of the plurality of operation target objects.

With the display control device according to (((11))), it becomes difficult to display the support information about the operation target object that does not require the operation by the user as compared with a case where the one operation target object is not specified from among the operation target objects for which the operation has not been completed.

With the display control device according to (((12))), it becomes easy for the user to perform the operation according to the state of the one operation target object as compared with a case where the support information is not displayed according to the state of one operation target object.

With the display control device according to (((13))), it becomes difficult for the user to perform an erroneous operation of the one operation target object, as compared with a case where the support information is not displayed according to the relationship between the state of the user and one operation target object.

With the display system according to (((14))), it is possible to provide a display system or the like that displays support information so that the operation target object can be operated in a case where there are the plurality of operation target objects.

With the program according to (((15))), it is possible to provide a program or the like that displays support information so that the operation target object can be operated in a case where there are the plurality of operation target objects.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: display system
10: display device
11: display unit
12: imaging unit
20: display control device
21: information processing unit
21a: CPU
21b: ROM
21c: RAM
22: storage unit
701, 702, 703: support image

## Claims

1. A display control device comprising:
a processor configured to perform a control to display support information for supporting an operation of an operation target object included in a captured image that is obtained by imaging a real space by superimposing the support information on the real space or the captured image,
wherein the processor is configured to:
display the support information of one operation target object having a high priority of the operation by a user from among a plurality of operation target objects included in the captured image.

2. The display control device according to claim 1, wherein the processor is configured to:
specify the one operation target object based on a relationship between the user and each operation target object in the captured image.

3. The display control device according to claim 2, wherein the processor is configured to:
set the operation target object having a short distance to the user in the captured image among the plurality of operation target objects, as the one operation target object.

4. The display control device according to claim 2, wherein the processor is configured to:
set the operation target object in a direction pointed by the user in the captured image among the plurality of operation target objects, as the one operation target object.

5. The display control device according to any one of claims 2 to 4, wherein the processor is configured to:
specify the one operation target object based on a relationship between an instrument used by the user and the operation target object as the relationship between the user and each operation target object.

6. The display control device according to any one of claims 2 to 5, wherein the processor is configured to:
specify the one operation target object from a position of each operation target object in the captured image in a case where the processor cannot specify the one operation target object from the relationship between the user and each operation target object in the captured image.

7. The display control device according to claim 6, wherein the processor is configured to:
set the operation target object that is located close to a center in the captured image among the plurality of operation target objects, as the one operation target object.

8. The display control device according to any one of claims 2 to 5, wherein the processor is configured to:
receive a selection of the one operation target object from among the plurality of operation target objects, in a case where the processor cannot specify the one operation target object from the relationship between the user and each operation target object in the captured image.

9. The display control device according to any one of claims 6 to 8, wherein the processor is configured to:
determine that the one operation target object cannot be specified in a case where the number of the operation target objects in the captured image exceeds a predetermined number.

10. The display control device according to claim 1, wherein the processor is configured to:
specify the one operation target object based on an operation state of the plurality of operation target objects.

11. The display control device according to claim 10, wherein the processor is configured to:
specify the one operation target object from among the operation target objects for which a predetermined operation has not been completed, among the plurality of operation target objects.

12. The display control device according to any one of claims 1 to 11, wherein the processor is configured to:
display the support information according to a state of the one operation target object.

13. The display control device according to any one of claims 1 to 12, wherein the processor is configured to:
display the support information according to a relationship between a state of the user and the one operation target object in the captured image.

14. A display system comprising:
an imager that images a real space;
a display that displays an image; and
a processor that is configured to display support information for supporting an operation of an operation target object included in a captured image captured by the imager on the display by superimposing the support information on the real space or the captured image,
wherein the processor is configured to:
display the support information of one operation target object having a high priority of the operation by a user from among a plurality of operation target objects included in the captured image, on the display.

15. A program causing a computer that performs a control to display support information for supporting an operation of an operation target object included in a captured image that is obtained by imaging a real space by superimposing the support information on the real space or the captured image, to implement a function of:
displaying the support information of one operation target object having a high priority of the operation by a user from among a plurality of operation target objects included in the captured image.
